# EUROPÄISCHE PATENTSCHRIFT

(11) **EP 2 511 564 B1**
(45) Veröffentlichungstag und Bekanntmachung des Hinweises auf die Patenterteilung: **30.05.2018**
(21) Anmeldenummer: 12162952.1
(22) Anmeldetag: 03.04.2012
(51) Int. Cl.: F16F 9/512, B62K 25/08, F16F 9/46

(54) **Einrichtung und Verfahren zur Führung eines Rades eines Fahrzeugs**
Device and method for guiding a wheel of a vehicle
Dispositif et procédé de guidage d'une roue de véhicule automobile

(30) Priorität: 13.04.2011 DE 102011002014
(43) Veröffentlichungstag der Anmeldung: 17.10.2012
(73) Patentinhaber: KTM AG, 5230 Mattighofen (AT)
(72) Erfinder: Risse, Sebastian, 84453 Mühldorf am Inn (DE)
(74) Vertreter: Söllner, Udo

(56) Entgegenhaltungen:
- DE-C1- 19 958 178
- US-A1- 2005 133 319
- US-A1- 2008 296 526

## Beschreibung

Die vorliegende Erfindung betrifft eine Einrichtung zur Führung eines Rades eines Fahrzeugs, mit einer ersten und einer zweiten Dämpfungseinrichtung nach dem Oberbegriff des Anspruchs 1. Die Erfindung betrifft darüber hinaus ein Verfahren zur Führung eines Rades eines Fahrzeugs, dessen Radkraft veränderbar ist, mittels einer mit einer ersten Dämpfungseinrichtung und einer zweiten Dämpfungseinrichtung funktional gekoppelten Radführungseinrichtung, nach dem Oberbegriff des Anspruchs 13.

Bekannte Fahrwerke von Fahrzeugen, insbesondere solche, die für den Einsatz im Rennsport ausgelegt sind, zeichnen sich durch Radführungseinrichtungen aus, die dem Fahrzeug eine sehr dynamische Fahrbarkeit mit hohen Kurvengeschwindigkeiten verleihen, die mitunter der im Verlauf der Jahre zunehmend verbesserten Reifenqualität zu verdanken ist. Die immer weiter verbesserten Reifen zeichnen sich durch eine außerordentlich hohe Haftwirkung aus, die es dem Fahrer ermöglicht, sehr hohe Kurvengeschwindigkeiten zu erreichen.

Diese technischen Fortschritte machen sich bereits bei straßenzugelassenen Fahrzeugen bemerkbar, ganz besondere Aufmerksamkeit gebührt ihnen jedoch im Rennsport. Aufgrund verbesserter Fahrwerke und einer Verschiebung der Haftgrenze der verbesserten Reifen können Kurven mit Geschwindigkeiten durchfahren werden, die bislang aufgrund eines früher einsetzenden Rutschens der Reifen nicht möglich gewesen wären.

Aufgrund der Verschiebung der Haftgrenze kann es beim Betrieb eines Fahrzeugs unter dynamischen Fahrbedingungen zu einem früher unbekannten Problem kommen, dem sogenannten Chattering. In erster Linie tritt das Chattering beim Durchfahren von Kurven mit für diese Kurven sehr hoher Geschwindigkeit auf, und zwar während einer ganz bestimmten, charakteristischen Zeitspanne. Fährt ein Fahrer mit seinem Fahrzeug auf eine Kurve zu und in die Kurve hinein, betätigt er zur Verringerung der Geschwindigkeit die am Vorderrad oder den Vorderrädern wirkende Fahrzeugbremse. Das Chattering tritt typischerweise auf, nachdem der Fahrer die Bremse gelöst hat, gleichzeitig aber bevor er wieder Gas gibt. Es kommt dabei zu einem sehr schnellen, periodischen und heftigen Vibrieren des Fahrzeugs, welches seine Erklärung vermutlich in einem periodischen Verlieren und Wiedererlangen von Haftwirkung eines Reifens findet.

Während Chattering insbesondere im Rennsport auftritt, ist es auch bei straßenzugelassenen Fahrzeugen inzwischen ein bekanntes Phänomen.

Das vorstehend geschilderte Chattering wirkt sich besonders negativ bei Motorrädern aus. Wird mit dem Motorrad eine Kurve durchfahren, muss der Reifen am Vorderrad hohe Seitenführungskräfte aufbauen. Es kommt bei der Kurvenfahrt zu Radkraftschwankungen, beziehungsweise zu Schwankungen der resultierenden Summenkraft, die auf das Rad einwirkt, und damit auch zu Schwankungen der Radseitenführungskraft.

Chattering scheint dann aufzutreten, wenn das betreffende Rad, bei Motorrädern üblicherweise das Vorderrad, nicht mehr in der Lage ist, die zur Einhaltung des aktuellen Fahrzustands notwendigen Kräfte zu übertragen. Ist ein Kräftegleichgewicht nicht mehr gewährleistet, beginnt das betroffene Rad zu rutschen. Um dem entgegenzuwirken, kann der Fahrer den Schräglagenwinkel erhöhen und kommt meist zum Sturz oder er verlässt seine gewählte Linie in Richtung zu einem weiteren Kurvenradius, welcher weniger Querbeschleunigung zur Folge hat.

Die Radkraft schwankt zwischen Minima und Maxima, die Amplitude der Radkraftschwankung ist ein Maß dafür, wie groß beziehungsweise klein die Radkraft im jeweils betrachteten Augenblick ist. Durchläuft die Radkraft im betrachteten Augenblick aufgrund der Radkraftschwankung ein Minimum und ist das Minimum kleiner als die Radkraft, die im betrachteten Augenblick zur Aufrechterhaltung der für den vom Fahrer gewählten Schräglagenwinkel benötigten Seitenführungskraft, so kommt der Fahrer zum Sturz.

Treten die vorstehend geschilderten Radkraftschwankungen bei der Kurvenfahrt auf, und durchschreitet die Radkraft eines Rades ein Minimum, wird jeweils die Chance am größten, dass das betreffende Rad ins Rutschen kommt.

Durchschreitet die Radkraft ein Maximum, wird hingegen die bestmögliche Haftwirkung erreicht. Daraus erklärt sich, wieso es, speziell bei der Kurvenfahrt zu einem periodischen Rutschen und Wiedergewinnen an Halt eines oder mehrerer Räder kommen kann.

Bei der Kurvenfahrt folgt der Hinterreifen dem schräg gestellten Vorderreifen und wird dadurch gezwungen, einen bestimmten Schräglaufwinkel einzunehmen, er rutscht solange, bis sich ein vom, vom Fahrer gewählter Lenkwinkel und der Schräglage bestimmter quasistatioärer Gleichgewichtszustand einstellt. Es konnte beobachtet werden, dass sich das Chattering durch den Einsatz eines anderen Hinterreifens beeinflussen lässt, ohne aber einen allgemeingültigen Lösungsansatz durch die Veränderung des Hinterreifens zu bekommen.

Eine ein Rad eines Fahrzeugs führende Einrichtung besitzt üblicherweise eine Hauptfeder und eine Dämpfungseinrichtung, die der Bedämpfung der Federbewegung der Hauptfeder dient. Es hat sich gezeigt, dass sich durch die Erhöhung der Dämpfungskraft der bekannten Dämpfungseinrichtung das Problem des Chattering nicht zufrieden stellend lösen lässt.

Tritt bei der bereits erwähnten Kurvendurchfahrt mit hoher Geschwindigkeit Chattering auf, setzt dies einen Entstehungsmechanismus für selbsterregte Schwingungen in Gang, und es ist ebenfalls möglich, dass sich dieser Mechanismus sogar selbst aufschaukelt. Im ungünstigsten Fall tritt so ein Resonanzeffekt auf, und die Schwingungen und damit die Radkraftschwankungen erreichen eine extrem starke Ausprägung.

Aus den vorstehenden Erklärungen lässt sich folgern, wieso das Chattering bei Fahrzeugen mit älteren Fahrwerken nicht aufgetreten ist. Mit den älteren Fahrwerken waren Kurven ganz einfach nicht mit ähnlich hohen Geschwindigkeiten zu durchfahren. Die Extrembedingungen, unter welchen sich Chattering überhaupt erst manifestiert, wurden gar nicht erst erreicht.

Typischerweise äußert sich Chattering in mittels Datarecording messbaren Radkraftschwankungen mit einer Frequenz im Bereich von ungefähr 11 bis 25 Hz. Bei Rennen wurden Fahrwerke bislang, wenn Chatteringprobleme aufgetreten sind, oft manuell an die jeweiligen Fahrbedingungen angepasst, das Fahrwerk wurde mit anderen Worten nach dem Versuch-und-Irrtum-Prinzip bis zu einem Punkt hin solange verändert, bis der Fahrer das Chattering nicht mehr als sehr störend beschrieb. Sobald jedoch eine der Rahmenbedingungen verändert wird - beispielsweise bei Fahrt auf einer anderen Strecke, bei veränderter Witterung oder mit anderen Reifen - kehrt das Problem zurück.

Anhand der US 2005/0133319 A1 ist ein Stoßdämpfer für ein Kraftfahrzeug bekannt geworden zum Dämpfen der Relativbewegung zwischen einem Fahrzeugrad und dem Fahrzeugaufbau. Der Dämpfer weist ein Dämpfergehäuse auf, welches mit einem Dämpfungsfluid gefüllt ist und einen an einer Kolbenstange angeordneten Kolben, sodass der Innenraum des Dämpfergehäuses in zwei Arbeitskammern aufgeteilt ist und sowohl ein erstes Dämpferelement als auch ein zweites Dämpferelement vorgesehen ist, welches sich über Bypassbohrungen in der Kolbenstange mit den beiden Arbeitskammern in Fluidkommunikation befindet.

Anhand der US 2008/0296526 A1 ist ein Dämpferventil für einen Schwingungsdämpfer bekannt geworden, welches eine Führungshülse aufweist, die an der Kolbenstange des Schwingungsdämpfer gleitet. Das Dämpferventil weist einen ringförmigen Dämpferventilkörper auf, der wenigstens eine Durchgangsöffnung aufweist und axial mittels eines Eingriffs mit der Führungshülse fixiert ist. Die Durchgangsöffnung ist wenigstens teilweise mittels einer Ventilscheibe abgedeckt, welche mittels einer Feder belastet ist, die sich an ihrem Ende an einer mit der Führungshülse verbundenen Federplatte abstützt.

Aus der Druckschrift DE 199 58 178 C1 ist eine Vorrichtung zur Federung und Dämpfung eines Rades eines Fahrzeugs mittels einer Tilgeranordnung bekannt, welche in Reihe zwischen zwei Tragfedern angeordnet ist. Die Dämpfungswirkung einer Tilgeranordnung kann prinzipiell als Trägheitseffekt gedeutet werden; Schwingungen werden auf eine träge Tilgermasse übertragen, und ist diese schwer genug, vermögen die Schwingungen diese nicht stark oder nur sehr kurzzeitig zu anzuregen. Je größer die Masse der Tilgeranordnung, desto stärker ist die von ihr ausgehende dämpfende Wirkung. Es ist jedoch in der Praxis nicht möglich, die Masse gering genug zu halten, dass das Fahrverhalten - insbesondere im Rennsport - nicht entscheidend beeinträchtigt wird. Gleichzeitig zeigt sich keine Verbesserung bezüglich des Chatterings unter Einsatz einer Tilgeranordnung. Zudem behindert eine große Tilgermasse eine dynamische Fahrbewegung des Motorrads.

Eine ähnliche Vorrichtung wurde von Renault® s.a.s. für den Formel-1 -Rennsport entwickelt. Bekannt wurde eine solche Vorrichtung als Massendämpfer. Dieser wurde vor allem im Jahr 2006 im Formel-1-Rennwagen R26 eingesetzt. Die genannte Vorrichtung weist eine Tilgermasse von rund 9 kg auf, welche zwischen zwei Federn gelagert wird, und im Frontbereich eines Rennwagens montiert wurde. Mit einem solchen modifizierten Massendämpfer kann der Frontbereich eines Rennwagens stabilisiert werden, und Vibrationen infolge von Radkraftschwankungen werden erheblich eingeschränkt. Als aus offensichtlichen Gründen nachteilig erweist sich jedoch das hohe Gewicht einer solchen Vorrichtung. Bereits aufgrund des Gewichts ist diese Vorrichtung für den Rennsport damit äußerst ungeeignet, und der modifizierte Massendämpfer wurde im Rahmen des Formel-1-Rennsports aus Sicherheitsgründen verboten. Zudem ist eine solche Vorrichtung aufgrund ihres Gewichts für einen sinnvollen Einsatz beim Motorrad, ob im Rahmen oder außerhalb des Rennsports, völlig ungeeignet.

Ebenfalls für den Einsatz im Formel-1-Rennsport entwickelt wurde der so genannte J-Dämpfer ("J-Damper"), welcher in Fachkreisen auch als "Inerter" bekannt ist. Im Gegensatz zu dem beschriebenen, modifizierten Massendämpfer ist dieser nach wie vor für den Einsatz im Formel-1-Rennsport zugelassen. Ein J-Dämpfer ist mit einer Zahnstange und wenigstens einem Zahnrad ausgestattet, wobei die Zähne der Zahnstange und des Zahnrads ineinandergreifen. Radkraftschwankungen induzieren Längsbewegungen der Zahnstange, und diese Bewegungen werden wiederum auf das Zahnrad, beziehungsweise auf mehrere Zahnräder übertragen, so dass es zu Drehbewegungen der Zahnräder kommt. Auf diese Weise wird Energie umgewandelt, und die Radkraftschwankungen werden somit eingeschränkt. Auch diese Vorrichtung ist jedoch nicht ohne ein nicht unerhebliches Mindestgewicht zu realisieren. Sie ist typischerweise ungefähr 3 kg schwer, und auch ein Zusatzgewicht von 3 kg am Fahrzeug ist nachteilig für den Rennsport. Darüber hinaus ist sie zu schwer, zu platzaufwendig, und daher, wie auch schon die vorstehend beschriebenen Vorrichtungen, ungeeignet für einen sinnvollen Einsatz an einem Motorrad.
Das Problem des Chattering ist nach wie vor ungelöst. Eine Folge des Chatterings kann ein - von außen manchmal unerklärlich erscheinender - Kontrollverlust über das Fahrzeug sein. Während des Chatterings wirken von außen kaum erkennbare, immense Kräfte auf das Fahrwerk und oft kommt es beim Motorradfahren, wenn Chattering auftritt, unmittelbar zum Sturz, weil der Motorradfahrer kein Kräftegleichgewicht mehr herstellen kann, wenn die Seitenführungskraft zum Ausgleich der Fliehkraft nicht mehr ausreicht, und ein Rad - meist das Vorderrad - wegrutscht. Ein Kräftegleichgewicht könnte nur herbeigeführt werden, indem der Kurvenradius vergrößert wird, oder indem die Kurve langsamer durchfahren wird. Tritt Chattering auf, und verringert der Fahrer seine Schräglage um einen größeren Bogen zu fahren, kommt er eventuell von der Strecke ab, verliert in einer Wettbewerbssituation Zeit, oder, es kommt - wie bereits angegeben - schlichtweg zum Sturz.
Es ist daher Aufgabe der Erfindung, eine Einrichtung zur Führung eines Rades eines Fahrzeugs zu schaffen, welche die vorstehend genannten Probleme beseitigt und die Auswirkungen des Chattering verringert. Auch soll ein dazu geeignetes Verfahren geschaffen werden.
Die vorliegende Erfindung weist zur Lösung dieser Aufgabe hinsichtlich der Einrichtung zur Führung eines Rades eines Fahrzeugs die im Anspruch 1 angegebenen Merkmale auf. Vorteilhafte Ausgestaltungen sind in weiteren Ansprüchen beschrieben. Darüber hinaus weist die Erfindung hinsichtlich des Verfahrnes die im Anspruch 13 angegebenen Merkmale auf, vorteilhafte Ausgestaltungen hiervon sind in den weiteren Ansprüchen beschrieben.
Die Erfindung sieht eine Einrichtung zur Führung eines Rades eines Fahrzeugs vor, mit einer ersten Dämpfungseinrichtung und einer zweiten Dämpfungseinrichtung, wobei die zweite Dämpfungseinrichtung zur Erzeugung einer zur Radkraft zwischen 0 und 90 Grad phasenverschobenen zweiten Dämpfungskraft ausgebildet ist, und die erste Dämpfungseinrichtung zur Beschränkung einer weitgehend periodischen Radkraftschwankungsamplitude mittels Erzeugung einer zur Radkraft zwischen 90 und 270 Grad phasenverschobenen ersten Dämpfungskraft ausgebildet ist. Unter Radkraft wird dabei die resultierende Summenkraft oder eine Projektion der resultierenden Summenkraft, die auf das Rad einwirkt, verstanden. Die Erfindung schließt eine Einrichtung mit ein, bei der die Radkraft als die gesamte resultierende Summenkraft zu verstehen ist. Nachfolgend soll aber jeweils, ohne dass dadurch der Schutzbereich der Erfindung eingeschränkt wird, unter Radkraft die resultierende, senkrecht zur Fahrbahn auf das Rad einwirkende Summenkraft verstanden werden.

Die Schwankungsperiode der ersten Dämpfungskraft entspricht weitgehend einem n-fachen der Periode der Radkraftschwankungen. Die Dämpfungskraft kann dabei vollständig periodisch sein, eine variable Periode aufweisen, oder auch nur weitgehend periodisch sein, da beispielweise die Amplitude der Dämpfungskraftschwankung variabel sein kann. Unter der Zahl n ist dabei eine ganze Zahl (1, 2, 3,...) oder eine rationale Zahl (1/2, 1/3, 1/4,...) zu verstehen. Die exakte oder ungefähr geltende Periode kann mit anderen Worten einerseits identisch sein mit, oder ein Vielfaches der Periode der Radkraftschwankung betragen. Andererseits kann die Periode der Radkraftschwankung einem Vielfachen der Periode der Dämpfungskraftschwankung entsprechen - in diesem Fall ist n als eine rationale Zahl anzusehen. Wenn die Perioden der Radkraftschwankung und der Dämpfungskraftschwankung unterschiedlich groß sind, ist die Phasenverschiebung von zwischen 90 und 270 Grad zu beurteilen, indem eine Periode der Schwankungsamplitude der Kraft mit der größeren Periode mit n, beziehungsweise 1/n Perioden der Schwankungsamplitude der Kraft mit der kleineren Periode verglichen wird, indem mit anderen Worten also gleich lange zeitliche Abschnitte miteinander verglichen werden.

Die angesprochene Phasenverschiebung kann für alle Frequenzen und/oder Amplituden der Radkraftschwankung erzeugt werden, oder auch in Abhängigkeit von der Frequenz und/oder der Amplitude der Radkraftschwankung. Insbesondere kann die genannte Phasenverschiebung zwischen Dämpfungskraft und Radkraft beispielsweise nur für wenigstens einen vorgegebenen Frequenzbereich der Radkraftschwankung, beispielsweise für den Bereich zwischen 14 und 25 Hz, erzeugt werden. Der Vorteil liegt darin, dass die Dämpfungskraft spezifisch auf den Frequenzbereich abgestimmt werden kann, in dem das Chattering auftritt.

Die Dämpfungseinrichtung kann ein Bauteil der Einrichtung sein, sie kann aber auch körperlich von ihr getrennt und beispielweise an einem anderen Bauteil des Fahrzeugs befestigt sein.

Die Radkraft, deren Schwankungsamplitude beschränkt wird, setzt sich aus einer Vielzahl an verschiedenen Kräften zusammen, unter anderem beispielsweise der Massenkraft, außerdem aus Federkräften, Dämpfungskräften sowie systemimmanenten Reibungskräften. Die Massenkraft setzt sich wiederum aus Radmassenkraft mit von Felge, Reifen und Nabe verbundenen Beiträgen, aus der Massenkraft der sich mit dem Rad aufwärts und abwärts bewegenden Komponenten der Radaufhängung, beispielsweise einer Teleskopfedergabel, sowie anderen, durch ungefederte Massen hervorgerufenen Massenkräften zusammen. Beiträge können wiederum auf einen Kotflügel, auf Gabelöl, eine Bremsanlage, verschiedene Sensoren, oder auch auf weitere Bauteile des Fahrzeugs zurückgeführt werden.

Wird die Radkraftschwankung beim Betrieb eines mit einer erfindungsgemäßen Einrichtung ausgestatteten Fahrzeugs mittels Datarecording aufgezeichnet, fällt die Radkraftschwankungsamplitude infolge der erzeugten Beschränkung geringer aus als bei einem Fahrzeug, welches mit einer aus dem Stand der Technik bekannten Einrichtung zur Führung eines Rades ausgestattet ist. Damit ist auch der Nachweis des Einsatzes einer erfindungsgemäßen Einrichtung mittels Datenaufzeichnung von Kraftschwankungsamplituden einfach zu erbringen.

Insbesondere ist die Dämpfungskraft einer bekannten Dämpfungseinrichtung, gegenüber der Radkraft üblicherweise zwischen 0 und 90Grad phasenverschoben. Bei einem Fahrzeug, welches mit der erfindungsgemäßen Einrichtung zur Führung eines Rades ausgestattet ist, ist die von der erfindungsgemäßen ersten Dämpfungseinrichtung erzeugte Dämpfungskraft zwischen 90 und 270 Grad, und vorzugsweise zwischen 120 und 240 Grad phasenverschoben. Damit ist diese Phasenverschiebung wesentlich näher bei 180 Grad , oder sie beträgt sogar weitgehend 180 Grad, der Wert, für welchen die Dämpfungskraft der Radkraft am effektivsten, nämlich antiperiodisch, entgegenwirkt.

Eine bevorzugte Ausführungsform der Einrichtung führt zu einer Phasenverschiebung von weitgehend 135 Grad. Damit findet bereits eine wesentlich bessere Auslöschung zwischen Dämpfungskraft und Radkraft statt als beim Einsatz einer aus dem Stand der Technik bekannten Dämpfungseinrichtung. Folglich kommt es auch zu geringeren Radkraftschwankungsamplituden. Die erfindungsgemäße Einrichtung erlaubt damit, Chatteringeffekte beim Fahren weitgehend oder sogar vollständig zu eliminieren. Der sich verändernden Radkraft folgt mit einem Phasenversatz von weitgehend 135 Grad die durch die Dämpfungseinrichtung erzeugte Dämpfungskraft, die Schwankungsbreite der resultierenden Radkraft wird verringert, ein für ein etwaiges Rutschen des Rades ohne die erfindungsgemäße Dämpfungseinrichtung verantwortliches Radkraftminimum wird angehoben, die resultierende Radkraft bleibt mit der erfindungsgemäßen Dämpfungseinrichtung oberhalb des das Rutschen herbei führenden Radkraftminimums, der Fahrer kann im Umkehrschluss eine dem erhöhten Radkraftminimum entsprechende höhere Kurvengeschwindigkeit fahren, die Kurvengrenzgeschwindigkeit, bei der ein Rutschen des Rades auftritt, wird erhöht.

Gemäß einer Weiterbildung der erfindungsgemäßen Einrichtung ist die erste Dämpfungseinrichtung zur mechanischen und/oder elektrischen und/oder magnetischen und/oder rheologischen und/oder hydraulischen und/oder chemischen Erzeugung der Dämpfungskraft ausgebildet. Die Dämpfungskraft kann mit der ersten Dämpfungseinrichtung elektronisch generiert und beispielsweise mit einer Ventilsteuerung zeitlich abgestimmt, mit einem Magnetfeld induziert, mittels eines durch ein unter Druck stehenden Hydraulikfluids in Bewegung versetzten Kolbens, durch gezielte Beeinflussung des viskoelastischen Verhaltens eines Fluids - also rheologisch - oder mittels einer weitgehend reversiblen oder zyklischen chemischen Reaktion erzeugt werden.

Ist die erste Dämpfungseinrichtung zur hydraulischen Erzeugung der Dämpfungskraft ausgebildet, weist die erfindungsgemäße Einrichtung vorzugsweise wenigstens einen Kolben auf, der relativ zu einem in einer Fluidkammer angeordnetem Dämpfungsfluid verschiebbar angeordnet ist. Wenigstens ein Teil der Dämpfungskraft wird dann nach dem Wechselwirkungsprinzip - dem Dritten Newtonschen Axiom - infolge oder durch Übertragung der Gegenkraft (Reaktion) zu der zur Verschiebung des Kolbens in dem Dämpfungsfluid aufgewendeten Kraft (Aktion) erzeugt. Durch die den Kolben bewegende Kraft wird dabei Arbeit verrichtet. Bei Radkraftschwankungen entstehende kinetische Energie wird infolge dieser Arbeit an Kolben und Dämpfungsfluid umgewandelt und schließlich, eventuell nach weiterer Umwandlung, als Wärmeenergie abgegeben. Die Radkraftschwankung fällt damit kleiner aus als ohne Einsatz einer erfindungsgemäßen Einrichtung, da die für das Fortsetzen der bei einer Schwankung eingeleiteten Bewegung benötigte Energie fortlaufend, mittels Verschiebungen des Kolbens in dem Dämpfungsfluid, zumindest teilweise entzogen wird.

Insbesondere wird mit diesem Energieentzug ohne eine erfindungsgemäße Einrichtung zu erwartenden, selbsterregten Schwingungen des Systems oder sogar resonanzartigen Phänomenen die energetische Grundlage entzogen.

Gemäß einer Weiterbildung der erfindungsgemäßen Einrichtung weist die erste Dämpfungseinrichtung eine Vorrichtung zur Erzeugung einer Phasenverschiebung zwischen der Radkraft und der Dämpfungskraft auf. Auf diese Weise wird die Phasenverschiebung von einem körperlich abgrenzbaren Bauteil, der soeben genannten Vorrichtung, erzeugt. Ein Vorteil liegt darin, dass diese Vorrichtung für den Einsatz in bestimmten Fahrzeug fein eingestellt werden kann. Zusätzlich ist bei auftretenden Defekten der Dämpfungseinrichtung das Auswechseln dieser Komponente oder eventuell eines anderen Bauteils einzeln möglich.

Bei einer vorteilhaft ausgebildeten, erfindungsgemäßen Einrichtung weist die Vorrichtung zur Erzeugung einer Phasenverschiebung zwischen der Radkraft und der Dämpfungskraft eine Dämpfungsfedereinrichtung auf, und der - relativ zu einem in einer Fluidkammer angeordneten Dämpfungsfluid - verschiebbar angeordnete Kolben ist innerhalb eines eine Radkraft übertragenden und die Fluidkammer ausbildenden Dämpfungsrohrs bewegbar an der Dämpfungsfedereinrichtung angeordnet. Der Kolben ist also insbesondere nicht mit weiteren Bauteilen der Einrichtung, und damit nicht starr verbunden. Er kann sich gegen die Wirkung des Dämpfungsfluids sowie der Dämpfungsfedereinrichtung und eventuell auftretenden Reibungskräften zwischen dem Kolben und dem Dämpfungsrohr bewegen. Der Kolben und die Dämpfungsfedereinrichtung erzeugen einen Dämpfungskraftverlauf, welcher phasenverschoben ist gegenüber dem Verlauf der Radkraft.

Die Dämpfungsfedereinrichtung weist vorzugsweise zwei Federn auf, und der Kolben ist zwischen den beiden Federn angeordnet. Damit bewirkt eine Verschiebung des Kolbens jeweils eine Einfederung der einen Feder und eine gleichzeitige Ausfederung der anderen Feder. Verschiebt sich der Kolben in die entgegengesetzte Richtung wird die jeweils andere Feder eingefedert, beziehungsweise ausgefedert. Der Vorteil liegt darin, dass Kolben und Federeinrichtung beidseitig an anderen Bauteilen der erfindungsgemäßen Einrichtung befestigt werden können, wobei der Kolben aber an keiner Seite an einem weiteren Bauteil nebst der Dämpfungsfedereinrichtung befestigt werden muss.

Der Kolben bleibt damit schwimmend im Dämpfungsfluid gelagert, die den Kolben und die Federn aufweisende Vorrichtung wird aber insgesamt wesentlich stabiler und ist auch weniger verschleißanfällig. Würde die Bewegung des Kolbens nur über eine einzelne Feder abgestützt werden, würde diese auf Druck und auf Zug belastet werden, da dies ihre Auslegung und ihre Festlegung am Kolben behindert. Zudem würde der Kolben aufgrund der Umkehrspanne der Feder bei der Änderung der Lastrichtung nicht mehr genau in seiner Achse bewegt werden, und damit Reibung an der Innenwand des Dämpfungsrohrs erfahren, die zu einem ungünstigen Losbrechmoment des Kolbens gegen die jeweilige Bewegungsrichtung führen würde.

Die das Dämpfungsfluid aufnehmende Fluidkammer weist vorzugsweise zwei durch den Kolben körperlich getrennte Kammern auf, und die erfindungsgemäße Einrichtung ist vorzugsweise mit einem die beiden Kammern fluidisch verbindenden Verbindungsrohr ausgestattet. Durch das Verbindungsrohr kann Dämpfungsfluid von der einen in die andere Kammer verschoben werden, wenn der Kolben durch eine Verschiebung hydraulisches, also inkompressibles Dämpfungsfluid verdrängt. Ist das Dämpfungsfluid in den Kammern unter Druck angeordnet, wird damit eine Dämpfungswirkung durch Kolbenbewegungen ermöglicht. Eine Möglichkeit, die Dämpfungscharakteristik oder Steifigkeit der Dämpfungseinrichtung zu beeinflussen, liegt damit auch bereits in der Wahl eines Dämpfungsfluids mit spezifischen Eigenschaften wie beispielsweise einer erwünschten Viskosität.

Die Steifigkeit der Dämpfungsfedereinrichtung und/oder der Dämpfungseinrichtung der erfindungsgemäßen Einrichtung ist gemäß einer bevorzugten Ausführungsform zur Veränderung der Phasenverschiebung zwischen Radkraft und Dämpfungskraft anpassbar und/oder einstellbar. Die Steifigkeit der Dämpfungsfedereinrichtung wird beispielsweise eingestellt, indem der Querschnitt eines Drahtes einer Feder oder die Wicklungszahl einer Feder verändert wird. Zur Einstellung der Steifigkeit der Dämpfungseinrichtung sind vorzugsweise unterschiedliche Möglichkeiten vorgesehen.

Eine Möglichkeit besteht darin, dass die Einrichtung eine Einstellnadel besitzt, und das - die beiden körperlich getrennten Kammern fluidisch verbindende - Verbindungsrohr die jeweiligen Kammern fluidisch verbindende Durchlässe aufweist, wobei der Querschnitt mindestens eines Durchlasses mittels einer Einstellnadel zur Veränderung der Steifigkeit der Dämpfungseinrichtung veränderbar ist. Ein sich in eine Kammer öffnender Durchlass ist beispielsweise als Bohrung ausgeprägt. Die Einstellnadel ist dann in die Bohrung graduell einführbar, so dass der zum Durchströmen von Dämpfungsfluid freigegebene Bohrungsquerschnitt mit sich verändernder Einführtiefe der Einstellnadel veränderbar ist. Die Steifigkeit der Dämpfungseinrichtung und damit auch die bei gleich starken Radkraftschwankungen erzeugte Dämpfungskraft nimmt dabei mit zunehmender Einführtiefe zu.

Eine weitere oder zusätzliche Möglichkeit zur Veränderung der Steifigkeit der ersten Dämpfungseinrichtung wird dadurch erreicht, dass der Kolben mindestens einen mittels mindestens einer Federscheibe verschließbaren Fluiddurchlass besitzt. Die Steifigkeit wird eingestellt, indem die Dicke der Federscheibe, die Anzahl der Federscheiben, oder die Größe oder das Profil der einzelnen Federscheiben verändert wird.

Durch Auswahl von bestimmten Federscheiben mit vorgegebener Dicke, vorgegebener Größe und vorgegebenem Profil, und durch Anordnung dieser Federscheiben in einer bestimmten Reihenfolge, kann das gesamte Dämpfungsprofil der Dämpfungseinrichtung eingestellt werden. Auf diese Weise kann beispielsweise die Steifigkeit grundsätzlich sehr hoch gewählt werden, gleichzeitig aber dafür gesorgt werden, dass, wenn eine bestimmte Schwelle überschritten wird, sehr viel Dämpfungsfluid durch den Fluiddurchlass durchströmen kann, und die Dämpfungseinrichtung somit nur noch sehr wenig Widerstand bietet. Dazu können beispielsweise mehrere Federscheiben mit derselben Dicke eingesetzt werden. Eine andere Möglichkeit liegt beispielsweise darin, einen graduellen Verlauf der Steifigkeit vorzugeben, und beispielsweise unterschiedlich dicken Federscheiben anzuordnen.

Die Erfindung sieht vor, dass die ist die erfindungsgemäße Einrichtung mit einer zweiten Dämpfungseinrichtung funktional gekoppelt. Die zweite Dämpfungseinrichtung kann identisch mit oder abweichend von der ersten Dämpfungseinrichtung aufgebaut sein. Eine Möglichkeit liegt beispielweise darin, dass die zweite Dämpfungseinrichtung eine zweite Dämpfungskraft erzeugt, welche zur Radkraft zwischen 0 und 90 Grad phasenverschoben ist. Bei der zweiten Dämpfungseinrichtung kann es sich im einfachsten Fall um einen konventionellen Dämpfer handeln.

Die erfindungsgemäße Einrichtung kann als Radaufhängung ausgebildet sein, und wenigstens zwei Federbeine besitzen. Die erste Dämpfungseinrichtung kann in einem ersten Federbein und die zweite Dämpfungseinrichtung in einem zweiten Federbein der Radaufhängung angeordnet sein. Bei Motorrädern können beispielsweise die beiden Dämpfungseinrichtungen in zwei Teleskopfedergabelbeinen einer Teleskopfedergabel angeordnet sein. Auch bei einer Radaufhängung mit zwei Teleskopgabelbeinen und einer zentralen Feder-Dämpfer-Einheit kann die erfindungsgemäße Einrichtung eingesetzt werden, sie kann in diesem Fall dann in die zentrale Feder-Dämpfer-Einheit integriert werden. Eine erfindungsgemäße Einrichtung kann zudem auch mehr als zwei Dämpfungseinrichtungen aufweisen.

Vorzugsweise weist die erfindungsgemäße Einrichtung ein Teleskopfedergabelbein auf, welches ein Innenrohr, ein Außenrohr und eine Hauptfedereinrichtung besitzt, die innerhalb einer im Außenrohr ausgebildeten ersten Kammer angeordnet ist, wobei die Dämpfungseinrichtung innerhalb des Innenrohrs angeordnet ist. Die Dämpfungseinrichtung ist im Innenrohr angeordnet, während die Hauptfedereinrichtung im Außenrohr angeordnet ist. Die erfindungsgemäße Einrichtung kann außerdem sowohl in Zusammenwirkung mit einer konventionellen Telegabel - bei der die Hauptfedereinrichtung im Innenrohr angeordnet ist - als auch mit einer Upside-Down Telegabel eingesetzt werden, wie sie hier als bevorzugt bezeichnet wird.

Es spielt somit für den Einsatz der erfindungsgemäßen Einrichtung keine Rolle, ob ein Innenrohr oder eine Außenrohr oben, beziehungsweise unten angeordnet ist. In dem Innenrohr kann zudem auch ein Dämpfungsrohr angeordnet sein, und die erfindungsgemäße Einrichtung kann in dem Dämpfungsrohr angeordnet sein, welches nach einer vorteilhaften Ausführungsform zur Vermeidung von Kavitation ein unter Druck gesetztes Dämpfungsfluid aufweist. Das die erfindungsgemäße Einrichtung aufweisende Teleskopfedergabelbein ist in diesem Fall nach dem "Closed Cartridge"-Prinzip aufgebaut und besitzt einen Druckraum, der weitgehend konzentrisch zum Innenrohr angeordnet ist.

Die Einrichtung weist nach einer Weiterbildung der Erfindung ein zweites Teleskopfedergabelbein auf, welches wiederum ein Innenrohr und ein Außenrohr, sowie eine Hauptfedereinrichtung besitzt. Die Hauptfedereinrichtung ist ebenfalls innerhalb einer in dem Außenrohr des zweiten Teleskopfedergabelbeins ausgebildeten ersten Kammer angeordnet, und auch das zweite Teleskopfedergabelbein kann eine Dämpfungseinrichtung aufweisen, die innerhalb des Innenrohrs des zweiten Teleskopfedergabelbeins angeordnet ist. Bei der in dem zweiten Teleskopfedergabelbein angeordneten Dämpfungseinrichtung kann es sich um eine bekannte Dämpfungseinrichtung handeln, die eine oszillierende Bewegung der jeweiligen Hauptfeder in den beiden Teleskopfedergabelbeinen nach einer Impulsanregung dämpft.

Eine solche Einrichtung ist besonders geeignet für den Einsatz an einem Motorrad. Mittels Datarecording einer oder mehrerer Kraftschwankungsamplituden ist der Einsatz einer erfindungsgemäßen Einrichtung auch einfach nachweisbar. Eine Aufzeichnung der Radkraftschwankungen beim Durchfahren einer Streckenabschnitts, insbesondere einer Kurve, und/oder eine Aufzeichnung der Dämpfungskräfte gibt sofort darüber Aufschluss.

Zudem ist auch ein Verfahren zur Führung eines Rades eines Fahrzeugs, dessen Radkraft veränderbar ist, mittels einer mit einer ersten Dämpfungseinrichtung und einer zweiten Dämpfungseinrichtung funktional gekoppelten Radführungseinrichtung, Gegenstand der Erfindung. Die zweite Dämpfungseinrichtung erzeugt dabei eine zur Radkraft zwischen 0 und 90 Grad phasenverschobene Dämpfungskraft. Mit diesem Verfahren wird eine weitgehend periodische Radkraftschwankungsamplitude beschränkt mittels einer von der ersten Dämpfungseinrichtung erzeugten und zur Radkraft zwischen 90 und 270 Grad phasenverschobenen Dämpfungskraft, deren Periode weitgehend einem n-fachen der Periode der Radkraftschwankung entspricht. Es wird an dieser Stelle ausdrücklich auf die vorstehend bereits im Zusammenhang mit der erfindungsgemäßen Einrichtung dargebrachten Erläuterungen verwiesen. Diese sind auch auf das Verfahren übertragbar.

Nach einer Weiterbildung des erfindungsgemäßen Verfahrens, wird die Dämpfungskraft in Abhängigkeit der Amplitude und/oder der Frequenz der Radkraftschwankung erzeugt. Dies hat den Vorteil, dass das Beschränken der Dämpfungskraft spezifisch auf ein Fahrzeug oder auf bestimme Phänomene, wie das Chattering abgestimmt werden kann. Die Beschränkung kann beispielsweise nur für bestimmte Amplituden und/oder Frequenzbereiche der Radkraftschwankung vorgenommen werden. Der Frequenzbereich kann so gewählt werden, dass er die Chatteringfrequenzen, die bei dem Fahrzeug auftreten, einschließt.

Das erfindungsgemäße Verfahren schließt Ausführungsformen mit ein, bei denen die Dämpfungskraft mechanisch und/oder elektrisch und/oder magnetisch und/oder rheologisch und/oder hydraulisch und/oder chemisch erzeugt wird. Es wird an dieser Stelle wiederum auf die Erläuterung der erfindungsgemäßen Vorrichtung verwiesen.

Gemäß einer bevorzugten Ausführungsform des erfindungsgemäßen Verfahrens wird die Dämpfungskraft hydraulisch erzeugt mittels wenigstens eines, relativ zu einem in einer Fluidkammer angeordneten Dämpfungsfluid verschiebbar angeordneten Kolbens.

Die Erfindung wird im folgenden anhand der Zeichnung näher erläutert. Diese zeigt in:
- Fig.1: eine Längsschnittdarstellung eines Teleskopfedergabelbeins, welches Teil einer Einrichtung nach einer Ausführungsform gemäß der vorliegenden Erfindung formt;
- Fig. 2: eine vergrößerte Darstellung der Dämpfungseinrichtung des Teleskopfedergabelbeins nach Fig. 1;
- Fig. 3: eine Längsschnittdarstellung eines zweiten Teleskopfedergabelbeins, welches zusammen mit dem in Fig. 1 gezeigten Teleskopfedergabelbein zur Bildung einer Teleskopfedergabel eingesetzt werden kann;
- Fig. 4: eine vergrößerte Darstellung der Dämpfungseinrichtung des zweiten Teleskopfedergabelbeins nach Fig. 3;
- Fig. 5: eine Teleskopfedergabel mit Teleskopfedergabelbeinen nach den Fig. 1 und 3; und
- Fig. 6: eine grafische Darstellung eines Ausschnitts einer Datenaufzeichnung von Kraftschwankungsamplituden eines Motorrads mit einer Einrichtung gemäß der vorliegenden Erfindung sowie eines Motorrads mit einer konventionellen Radführungseinrichtung;

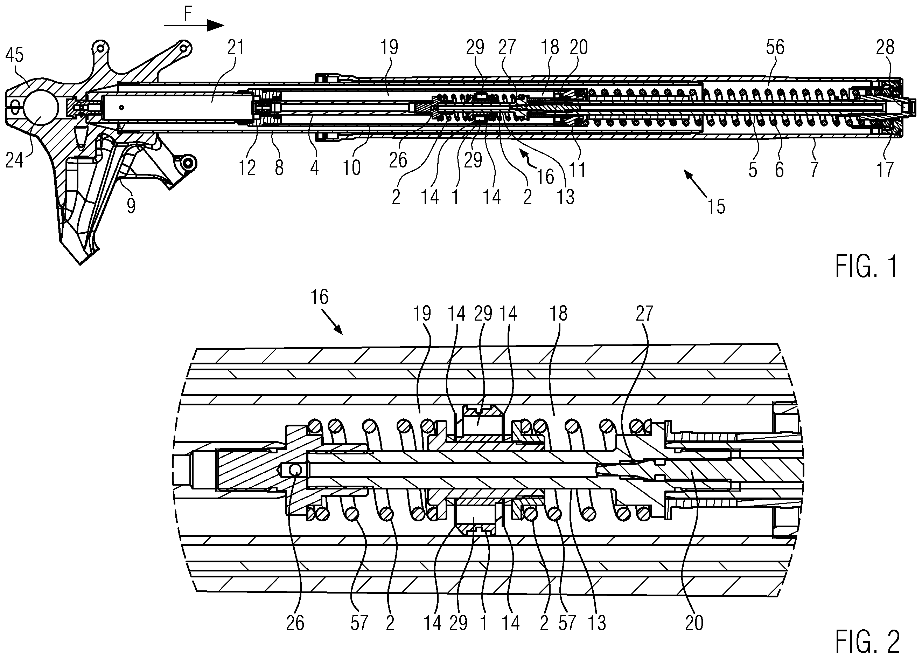

Fig. 1 zeigt eine Längsschnittdarstellung einer Ausführungsform eines ersten Teleskopfedergabelbeins 15, welches Teil einer Einrichtung gemäß der vorliegenden Erfindung ist.

Das erste Teleskopfedergabelbein 15 besitzt ein Innenrohr 8, ein Außenrohr 7, eine Dämpfungseinrichtung 16 und eine Federeinrichtung 6 in der Form einer Hauptfeder.

An einer Gabelfaust 9 kann eine nicht näher dargestellte Steckachse eines Vorderrads eines Motorrads mittels einer Klemmfaust 45 befestigt werden, wobei zu diesem Zweck eine Bohrung 24 zur Aufnahme der Steckachse vorgesehen ist.

Die Hauptfeder 6 ist in einer Kammer 56 in dem Außenrohr 7 angeordnet, und stützt sich an einem am oberen Ende des Teleskopfedergabelbeins 15 angeordneten Verschlussdeckel 17 ab. Die Kammer 56, ist mit einem ÖI-Luft-Gemisch gefüllt. Das untere Ende der Hauptfeder 6 ist an einem oberen Verschlussdeckel 11 abgestützt, welcher gemeinsam mit einem unteren Verschlussdeckel 12 ein Dämpfungsrohr 10 einschließt. Das Dämpfungsrohr ist nach dem Closed-Cartridge-Prinzip ausgebildet und mit einem unter Druck stehenden Dämpfungsfluid in der Form eines Gabelöls gefüllt. Der untere Verschlussdeckel 12 ist zudem mit einem Ausweichkörper 21 verbunden, welcher an der Gabelfaust 9 befestigt ist.

Das Dämpfungsrohr 10 ist von einem Bereich der Kammer 56, der als Ringraumkammer ausgebildet ist, umgeben, und der einen Bereich zwischen der Außenumfangsmantelfläche des konzentrisch zum Innenrohr 8 verlaufenden Dämpfungsrohrs 10 und der Innenumfangsmantelfläche des Innenrohrs 8 bildet.

Im Dämpfungsrohr 10 ist des weiteren eine Dämpfungseinrichtung 16 vorgesehen. Fig. 2 stellt den Bereich, in welchem die Dämpfungseinrichtung 16 angeordnet ist, vergrößert dar.

Die Dämpfungseinrichtung 16 ist mit einem Dämpfungskolben 1 ausgestattet, der zwei im Dämpfungsrohr 10 angeordnete Kammern 18, 19 voneinander körperlich trennt. Der Dämpfungskolben 1 ist außerdem mit einer Dämpfungsfedereinrichtung 2 gekoppelt, die zwei Dämpfungsfedern 57 aufweist. Die Dämpfungsfedereinrichtung 2 stützt sich am oberen Ende an einer oberen Kolbenstange 5 ab, welche den oberen Verschlussdeckel 15 durchsetzt und am unteren Ende stützt sich die Dämpfungsfedereinrichtung 2 an einer unteren Kolbenstange 4 ab.

Die obere Kolbenstange 5 ist außerdem über ein Verbindungsrohr 13 starr mit der unteren Kolbenstange 4 verbunden, wobei die Dämpfungsfedern 2 konzentrisch um das Verbindungsrohr 13 angeordnet sind. Dadurch, dass sich der Dämpfungskolben 1 an den beiden Dämpfungsfedern 57 abstützt, ist er schwimmend in dem im Dämpfungsrohr 10 vorhandenen Dämpfungsfluid gelagert.

Wird das Teleskopfedergabelbein 15 im eingebauten Zustand von einer, beispielsweise von einer Bodenunebenheiten stammenden, in Richtung des Pfeils F wirkenden Kraft beaufschlagt, so führt dies zu einer teleskopartigen Bewegung des Innenrohrs 8 relativ zum Außenrohr 7, das heißt, dass das Innenrohr 8 in der Zeichnungsebene in Richtung nach rechts verschoben wird, wobei dies gegen die Wirkung der Hauptfeder 6 geschieht.

Die obere Kolbenstange 5, das Verbindungsrohr 13 und die untere Kolbenstange 4 sind starr verbunden, so dass es beim teleskopartigen Ineinandergleiten von Außenrohr 7 und Innenrohr 8 unter anderem auch zu einer Verschiebung des in Fig. 1 links liegenden Endes der unteren Kolbenstange 4 kommt. Der Ausweichkörper 21 ist deshalb mit einem Innenraum zur Aufnahme der unteren Kolbenstange 4 ausgebildet. Beim eingefederten Zustand der Hauptfeder 6 greift daher die untere Kolbenstange 4 in den Ausweichkörper 21 hinein.

Bewegungen des Dämpfungskolbens 1 führen gleichzeitig jeweils zu einem Einfedern der einen Dämpfungsfeder 57, und einem Ausfedern der anderen Dämpfungsfeder 57, bei einer Bewegung in die Gegenrichtung umgekehrt. Das innerhalb des Innenraums des Dämpfungsrohrs 10 durch eine Bewegung des Dämpfungskolbens 1 verschobene Dämpfungsfluid gelangt bei der dargestellten Ausführungsform dabei jeweils über zwei verschiedene Wege von der einen in die andere der beiden Kammern 18, 19. Einerseits durch einen im Dämpfungskolben 1 ausgebildeten Durchlass 29, anderseits durch das Verbindungsrohr 13.

Der Dämpfungskolben 1 ist radial außen gegen die Innenmantelfläche des Dämpfungsrohrs 10 abgedichtet, und weist an seiner Oberseite und Unterseite Federscheiben 14 auf, die ein freies Durchströmen von Dämpfungsfluid durch den Durchlass 29 hindurch, aus dem Bereich der ersten Kammer 18 in die zweite Kammer 19, und umgekehrt, erst dann ermöglichen, wenn durch die Bewegung des Dämpfungskolbens 1 in der jeweiligen Kammer der Druck so weit ansteigt, dass sich die Federscheiben 14 von der Kolbenoberseite oder Kolbenunterseite abheben. Durch eine geeignete Wahl von Federscheiben 14, beispielsweise hinsichtlich ihrer Federsteifigkeit und/oder Anzahl kann das Dämpfungsprofil der Dämpfungseinrichtung 16 eingestellt werden, also die von ihr erzeugte Dämpfungskraft modifiziert werden.

Die beiden Kammern 18 und 19 sind außer mittels des Durchlasses 29 auch mit dem Verbindungsrohr 13 fluidisch verbindbar. Dämpfungsfluid kann durch einen sich in die erste Kammer 18 öffnenden Durchlass 27 sowie durch einen sich in die zweite Kammer öffnenden Durchlass 26 jeweils eintreten, beziehungsweise austreten. Der sich in die zweite Kammer 19 öffnende Durchlass 26 bleibt bei der dargestellten Ausführungsform immer für das Durchströmen von Dämpfungsfluid freigegeben.

Der sich in die erste Kammer 18 öffnende Durchlass 27 in der Form einer Bohrung kann zur Einstellung der Steifigkeit der Dämpfungseinrichtung 16 mit einer Einstellnadel 20 teilweise oder vollständig verschlossen werden, indem der für das Durchströmen vom Dämpfungsfluid freigegebene Anteil des Querschnitts der Bohrung 27 je nach Einführtiefe der Einstellnadel 20 verändert wird. Die Einstellnadel 20 ist am unteren Ende der oberen Kolbenstange 5 befestigt.

Eingestellt wird die Einstellnadel 20 durch Betätigung einer Einstellvorrichtung 28, welche am oberen Ende der oberen Kolbenstange 5 angeordnet ist. Eine Betätigung der Einstellvorrichtung führt zu einer Axialverlagerung der Einstellnadel 20 relativ zur Bohrung 27 und damit zur Einstellung des für den Fluiddurchtritt zur Verfügung stehenden Öffnungsquerschnitt der Bohrung 27 und zwar über das untere konische Ende der Einstellnadel 20.

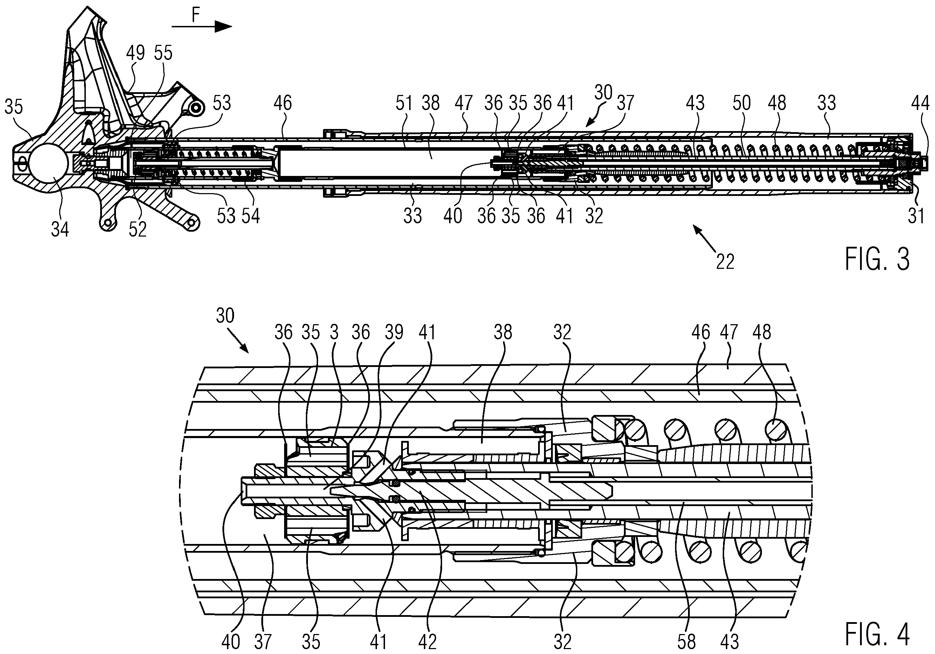

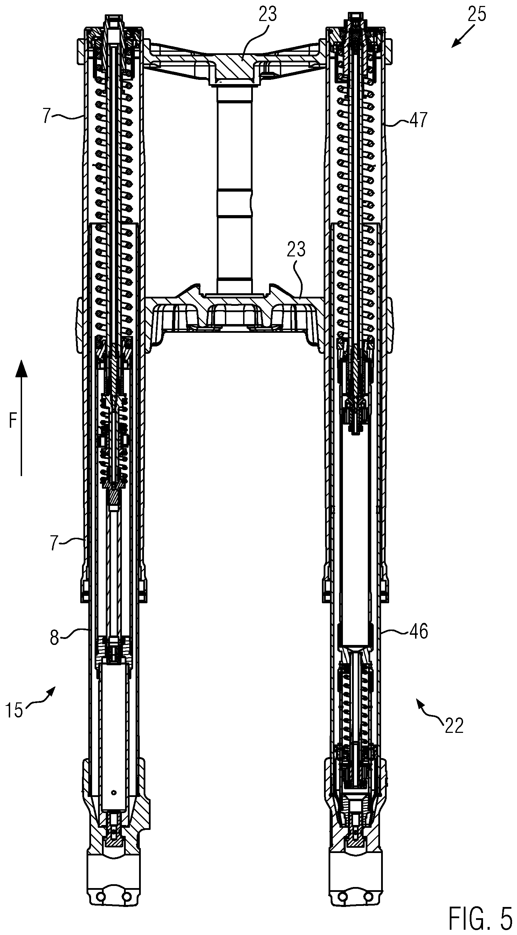

In der Fig. 5 ist eine Teleskopfedergabel 25 dargestellt, wie sie bei einem nicht näher dargestellten Motorrad verbaut werden kann. Das eine Teleskopfedergabelbein 15 entspricht dem vorstehend beschriebenen und in Fig. 1 dargestellten Teleskopfedergabelbein. Das zweite Teleskopfedergabelbein 23 wird nachfolgend unter Bezugnahme auf Fig. 3 der Zeichnung erläutert werden.

Auch das zweite Teleskopfedergabelbein 22 besitzt wiederum ein Innenrohr 46, ein Außenrohr 47, eine Dämpfungseinrichtung 30 und eine Federeinrichtung in der Form einer Hauptfeder 48.

Analog wie bereits für das erste Teleskopfedergabelbein 15 beschrieben, kann an einer Gabelfaust 49 eine nicht näher dargestellte Steckachse eines Vorderrads eines Motorrads mittels einer Klemmfaust 35 befestigt werden, wobei zu diesem Zweck eine Bohrung 34 zur Aufnahme der Steckachse vorgesehen ist.

Die Hauptfeder 48 stützt sich an einem am oberen Ende des Teleskopfedergabelbeins 22 angeordneten Verschlussdeckel 31 ab und am unteren Ende der Hauptfeder 48 an einem topfförmig ausgebildeten Deckel 32. Die Hauptfeder 48 ist in einer Kammer 33 angeordnet, die mit einem ÖI-Luft-Gemisch gefüllt ist. Die Kammer 33 geht weiter unten im Teleskopfedergabelbein, das heißt in der Fig. 3 auf der linken Seite, in einen als Ringraumkammer 33 ausgeprägten Bereich über, welcher im Innenrohr 46 angeordnet ist.

Die Ringraumkammer 33 bildet einen Bereich zwischen der Außenumfangsmantelfläche eines konzentrisch zum Innenrohr 46 verlaufendes Dämpfungsrohrs 51 und der Innenumfangsmantelfläche des Innenrohrs 46. Das Dämpfungsrohr 51 ist vollständig mit einem unter Druck stehenden Dämpfungsfluid in der Form eines Gabelöls gefüllt und wird von dem topfförmig ausgebildeten Deckel 32 von der Kammer 33 abgeschlossen. Bei der dargestellten Ausführungsform des Teleskopfedergabelbeins 22 ist mit anderen Worten das Dämpfungsrohr nach dem Closed-Cartridge-Prinzip ausgebildet.

Wird das Teleskopfedergabelbein 22 im am Motorrad eingebauten Zustand von einer, beispielsweise von einer Bodenunebenheiten stammenden, in Richtung des Pfeils F wirkenden Kraft beaufschlagt, so führt dies zu einer teleskopartigen Bewegung des Innenrohrs 46 relativ zum Außenrohr 47, das heißt, dass das Innenrohr 46 in der Zeichnungsebene in Richtung nach rechts verschoben wird, wobei dies gegen die Wirkung der Hauptfeder 50 geschieht. Die Hauptfeder 50 wird dabei komprimiert und ein Dämpfungskolben 3 verschiebt sich relativ zum Dämpfungsrohr 51 und verdrängt innerhalb des Innenraums des Dämpfungsrohrs 51 vorhandenes Dämpfungsfluid über seine Kolbenflächen.

Der Dämpfungskolben 3 ist ein Bauteil einer Dämpfungseinrichtung 30. Der Bereich, in welchem die Dämpfungseinrichtung 30 angeordnet ist, ist in Fig. 4 näher dargestellt.

Der Dämpfungskolben 3 trennt den Bereich innerhalb des Dämpfungsrohrs 51 körperlich in die beiden Kammern 37 und 38. Der Dämpfungskolben 3 besitzt einen Durchlass 35, durch welchen Dämpfungsfluid zwischen den Kammern 37 und 38 hindurch strömen kann.

Der Dämpfungskolben 3 weist an seiner oberen und unteren Kolbenfläche Federscheiben 36 auf, die einen Durchlass 35 verschließen und freigeben, und zwar in Abhängigkeit der Bewegungsrichtung des Dämpfungskolbens 3 und des in der jeweiligen Kammer 37 und 38 aufgebauten Drucks. Eine Durchströmung des Durchlasses 35 durch Dämpfungsfluid aus der ersten Kammer 37 in die zweite Kammer 38, und umgekehrt, findet dann statt, wenn der Federscheiben 36 beaufschlagende Öffnungsdruck so weit ansteigt, dass diese von der jeweiligen Kolbenfläche abgehoben werden. Mittels Auswahl geeigneter Federscheiben 36 kann damit das Dämpfungsprofil der Dämpfungseinrichtung 30 eingestellt werden. Es wird hierbei auch auf die Ausführungen im Hinblick auf die Federscheiben 14 sowie die Einstellung des Dämpfungsprofils der Dämpfungseinrichtung 16 verwiesen. Diese sind analog auf die Einstellung des Dämpfungsprofils der Dämpfungseinrichtung 30 übertragbar.

Die beiden Kammern 37 und 38 sind außer durch den Durchlass 35 auch mit einem Verbindungsrohr 39 fluidisch verbindbar. Flüssigkeit kann durch einen in Fig. 3 auf der linken Seite des Verbindungsrohrs 39 dargestellten, sich in die erste Kammer 37 öffnenden Durchlass 40 sowie zwei sich in die zweite Kammer 38 öffnende Bohrungen 41 durchströmen. Der sich in die erste Kammer 37 öffnende Durchlass 40 bleibt bei der dargestellten Ausführungsform immer vollständig für das Durchströmen von Dämpfungsfluid freigegeben.

Die sich in die zweite Kammer 38 öffnenden Bohrungen 41 hingegen können zur Einstellung der Steifigkeit der Dämpfungseinrichtung 30 mit einer Einstellnadel 42 teilweise oder vollständig verschlossen werden, indem der für das Durchströmen von Dämpfungsfluid freigegebene Anteil des Querschnitts der Bohrungen 41 je nach Einführtiefe der Einstellnadel 42 verändert wird. Die Einstellnadel 42 ist am unteren Ende einer Kolbenstange 43 angeordnet. Eingestellt wird die Einstellnadel 42 durch Betätigen einer Einstellvorrichtung 44, welche am oberen Ende der Kolbenstange 43 angeordnet ist. Die Einstellvorrichtung wirkt auf ein Einstellrohr 58, welches innerhalb der Kolbenstange 43 angeordnet ist und eine Axialverschiebung der Einstellnadel 42 zur Freigabe oder zum Verschließen der Bohrungen 41 ermöglicht.

Wie in Fig. 3 erkennbar ist, ist im Bereich des unteren Endes des Dämpfungsrohrs 51 darüber hinaus ein Verbindungsrohr 52 vorgesehen, durch welches Dämpfungsfluid in eine weitere Kammer 55, die hinter dem Trennkolben 53 angeordnet ist, gelangen kann. Der Trennkolben 53 ist auf der sich in der Fig. 3 rechts befindlichen Seite auf einer Ausgleichsfedereinrichtung 54 abgestützt.

Wenn es nun, wie bereits vorstehend beschrieben, infolge einer von einer Bodenunebenheit stammenden, in Richtung des Pfeils F wirkenden Kraft, zum Auslösen einer teleskopartigen Bewegung zwischen Innenrohr 46 und Außenrohr 47 kommt, und der Dämpfungskolben 3 sich relativ zum Dämpfungsrohr 51 verschiebt, tritt die Kolbenstange 43 in den Innenraum des Dämpfungsrohrs 51 ein. Dies führt zur Verdrängung von Dämpfungsfluid im Innenraum des Dämpfungsrohrs 51.

Infolgedessen strömt Dämpfungsfluid durch das Verbindungsrohr 52 in die unterhalb des Trennkolbens 53 gelegene weitere Kammer 55 ein und drückt den Trennkolben 53 in der Ebene der Fig. 3 nach rechts, gegen die Wirkung einer Ausgleichsfedereinrichtung 54. Dadurch gibt der Trennkolben 53 auf seiner linken Seite ein Ausgleichsvolumen - zur Kompensation des durch die Kolbenstange 43 verdrängten Volumens - frei, in welches Dämpfungsfluid fließt. Sobald sich der Dämpfungskolben 3 wieder in die Gegenrichtung bewegt, drängt die Ausgleichsfedereinrichtung 54 mit ihrer Federkraft das Dämpfungsfluid wieder zurück, und das Ausgleichsvolumen nimmt ab.

In Fig. 5 ist eine Teleskopfedergabel 25 dargestellt, die ein erstes Teleskopfedergabelbein 15, wie in Fig.1 und 2 gezeigt, sowie ein zweites Teleskopfedergabelbein 22, wie in Fig. 3 dargestellt, aufweist. Zudem besitzt die Teleskopfedergabel 25 zwei Gabelbrücken 23. Ebenfalls zu sehen sind die beiden Innenrohre 8, 46 und die beiden Außenrohre 9, 47, sowie eine schematisch dargestellte Steckachse 59.

Vorstehend wurde zwar eine Ausführungsform des ersten Teleskopfedergabelbeins 15 anhand der Fig. 1 und 2 erläutert, bei der die Kartusche, also das Dämpfungsrohr 10 mit der Dämpfungseinrichtung 16, am unteren Ende des Teleskopfedergabelbeins, und die Hauptfedereinrichtung 6 am oberen Ende des Teleskopfedergabelbeins abgestützt ist, die Erfindung schließt aber auch Ausführungsformen eines Teleskopfedergabelbeins mit ein, bei denen die Kartusche mit Dämpfungseinrichtung 16 am oberen Ende des Teleskopfedergabelbeins, und die Hauptfedereinrichtung 6 am unteren Ende des Teleskopfedergabelbeins und damit in Nähe der Gabelfaust abgestützt ist.

Ist ein nicht näher dargestelltes Motorrad mit einer in Fig. 5 dargestellten Teleskopfedergabel 25 - oder mit einer abgewandelten Teleskopfedergabel gemäß vorstehender Bemerkung - ausgestattet, bilden sich andere Dämpfungskräfte aus, als wenn ein Motorrad nur mit einem oder mehreren konventionellen Teleskopfedergabelbein(en) ausgestattet ist. Der Unterschied lässt sich mittels Datarecording in einfacher Weise erfassen.

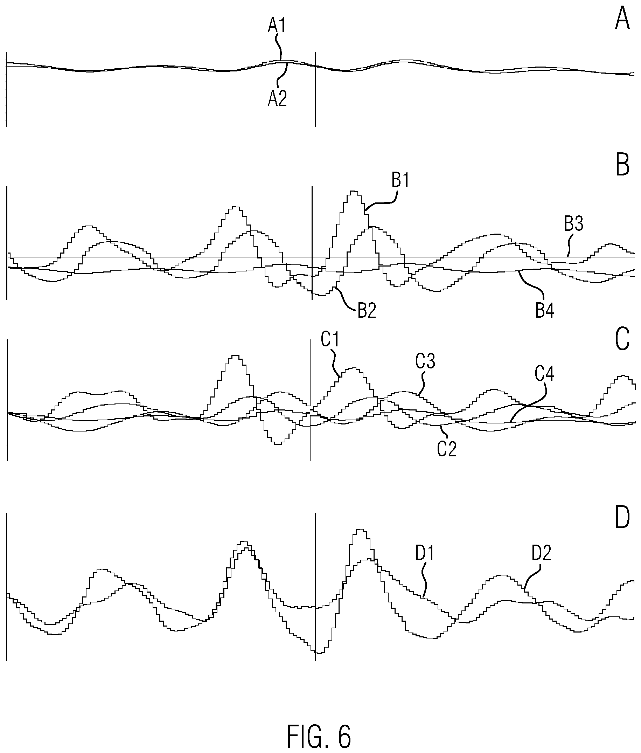

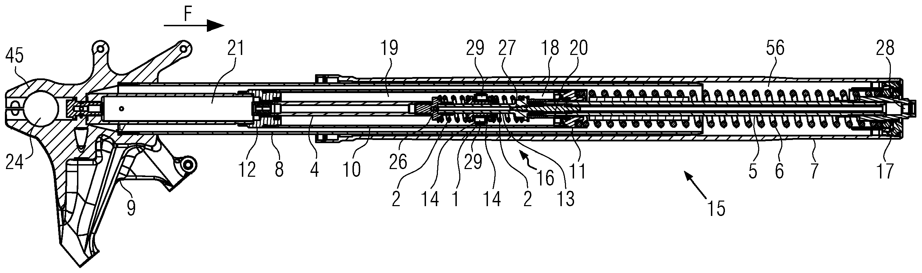

In Fig. 6 sind Ausschnitte von mittels Datenaufzeichnungen ermittelter Kurven von Kraftschwankungsamplituden zu sehen, nämlich Massenkraft, konventioneller Dämpfungskraft, konventioneller Federkraft, Dämpfungskraft der erfindungsgemäßen Einrichtung, resultierender Radkraft ohne die Dämpfungskraft der erfindungsgemäßen Einrichtung und resultierende Radkraft mit der Dämpfungskraft nach der erfindungsgemäßen Einrichtung. Die Kurvenzüge wurden anhand der zweimaligen Durchfahrt derselben Kurve mit einem Motorrad ermittelt, und zwar bei einer Fahrt ohne die erfindungsgemäße Einrichtung und bei einer Fahrt mit der erfindungsgemäßen Einrichtung am Motorrad.

Bei der Fahrt ohne die erfindungsgemäße Einrichtung besaß das Motorrad eine Teleskopfedergabel mit zwei konventionellen Teleskopfedergabelbeinen, gemäß Bezugszeichen 22.

Bei der Fahrt mit der erfindungsgemäßen Einrichtung besaß das Motorrad eine Teleskopfedergabel mit zwei unterschiedlichen Teleskopfedergabelbeinen, gemäß Bezugszeichen 15 und 22 - wie vorstehend anhand der Fig. 1 bis 4 beschrieben.

Bis auf die unterschiedliche Auslegung eines der beiden Teleskopfedergabelbeine war das Motorrad bei den beiden Referenzfahrten jedoch identisch aufgebaut.

Die in der Fig. 6 dargestellten Datenaufzeichnungen sind zudem anhand von Kurvendurchfahrten desselben Fahrers festgehalten worden. Damit ist ein qualitativer Vergleich gegeben zwischen den verschiedenen Einflüssen, welche die beiden Teleskopfedergabeln auf die dargestellten Schwankungsamplituden ausüben.

In der ersten Grafik A, sind die unterschiedlichen Federwegprofile der Hauptfedereinrichtungen der beiden Teleskopfedergabeln während der Kurvendurchfahrt dargestellt. Die Kurve A1 stellt den Verlauf der Auslenkung der Hauptfedereinrichtungen 6, 48 beim Durchfahren der Kurve mit dem Motorrad, welches mit der erfindungsgemäßen Teleskopfedergabel 25 ausgestattet ist, dar. Die Kurve A2 stellt die Auslenkung der Hauptfedereinrichtungen gemäß Bezugszeichen 48 dar, bei dem Motorrad, welches mit der konventionellen Teleskopfedergabel ausgestattet ist. Wie in der Grafik A zu erkennen ist, unterscheiden sich die Federwegprofile nicht maßgeblich.

In der Grafik B sind vier Komponenten der Radkraft, das heißt der senkrecht zur Fahrbahn wirkenden Kraft dargestellt, die während der Kurvendurchfahrt auf das Vorderrad des Motorrads mit der konventionellen Teleskopfedergabel eingewirkt hat. Die Kurve B1 stellt die Massenkraft, also die durch die verschiedenen Massen der Bauteile der Vorderradaufhängung erzeugten Komponenten der Radkraft, insbesondere also ohne Federkraft und Dämpfungskraft dar.

Die Schwankungen fallen heftig aus, eine Tatsache, die auf Chattering hindeutet. Wenn der Massenkraftverlauf eine hohe Schwankungsamplitude zeigt, wird vom Fahrer des Motorrads Chattering berichtet. Das Phänomen des Chatterings äußert sich in starken Vibrationen im Motorrad, insbesondere im Vorderrad, die in Fahrzeughochachsrichtung verlaufen. Wenn Chattering auftritt, führt dies zu einer stark schwankenden, vom Reifen übertragbaren Radkraft. Da dieses Phänomen insbesondere bei der Kurvenfahrt zu beobachten ist, in der Radkraftkomponenten in der Form von Seitenführungskräften benötigt werden, damit das Vorderrad nicht zur Seite wegrutscht, kann das Chattering zum Sturz führen, nämlich dann, wenn die Seitenführungskraft aufgrund der stark schwingenden Radkraft gerade ein Minimum durchläuft und dieses Minimum zu klein ist, um noch genügend Seitenführungskraft für die vom Fahrer gewählte Kurvenfahrt gewährleisten zu können.

In der Folge wird der Fahrer eine nächste Kurvenfahrt mit weniger hoher Querbeschleunigung und Kurvengeschwindigkeit wählen, um einen Sturz zu vermeiden.

Die Kurve B2 hinkt der Kurve B1 weitgehend um knapp 90 Grad phasenverschoben nach. Die Kurve B2 stellt die durch die bekannten Dämpfungseinrichtungen gemäß Bezugszeichen 30, in den Teleskopfedergabelbeinen gemäß Bezugszeichen 22, erzeugte Dämpfungskraft dar. Eine mittels einer Dämpfungseinrichtung 16 in einem Teleskopfedergabelbein 15 erzeugte Dämpfungskraft gibt es bei diesem Motorrad nicht, die Kurve B3 verläuft somit als eine Gerade mit konstantem Wert 0. Die Kurve B4 stellt, wie auch bereits die Kurve A2 der Grafik A, die Federkraft der Hauptfedereinrichtungen der konventionellen Teleskopfedergabel dar.

In der Grafik C ist eine zur Grafik B analoge Darstellung für das Motorrad mit der erfindungsgemäßen Teleskopfedergabel 25 gegeben. Die Kurve C1 stellt wiederum die Massenkraft dar, welche sich aufgrund der Unterschiede zwischen den in den beiden Motorrädern eingebauten Teleskopfedergabeln, bereits von der Massenkraft B1 unterscheidet. Die Kurve C2 stellt die durch die Dämpfungseinrichtung 30 in dem Teleskopfedergabelbein 22 erzeugte Dämpfungskraft dar. Diese hinkt der Massenkraft mit knapp 90 Grad Phasenverschiebung hinterher.

Beim Motorrad mit der erfindungsgemäßen Teleskopfedergabel 25 wird eine zweite, sich unterscheidende Dämpfungskraft mittels der Dämpfungseinrichtung 16 erzeugt. Diese ist als Kurve C3 dargestellt und hinkt der Massenkraft mit ungefähr 135 Grad Phasenverschiebung hinterher. Die Grafik C verdeutlicht, dass die Dämpfungskraft des Teleskopfedergabelbeins 15 aufgrund der Phasenverschiebung von 135 Grad im Bezug auf die Massenkraft beinahe antiperiodisch wirkt und damit den Amplitudenmaxima der Massenkraft effizienter entgegenwirkt als die mittels des Teleskopfedergabelbeins 22 erzeugte Dämpfungskraft.

Die Kurve C4 stellt schließlich, wie auch bereits die Kurve A1 der Grafik A, die Federkraft der Hauptfedereinrichtungen der erfindungsgemäßen Teleskopfedergabel dar.

In der vierten Grafik D ist die resultierende Radkraft für das Vorderrad der Motorräder im Vergleich bei den beiden Fahrten dargestellt. Die Kurve D1 stellt die resultierende Radkraft während der betreffenden Kurvenfahrt mit der erfindungsgemäßen Teleskopfedergabel 15 dar, die Kurve D2 stellt die resultierende Radkraft mit einer konventionellen Teleskopfedergabel dar.

Wie es ohne weiteres ersichtlich ist, zeigt der Kurvenverlauf D2 einen der stark schwankenden Massenkraft B1 folgenden Verlauf mit einer stark schwankenden Radkraft. Die Radkraft besitzt ausgeprägte Minima, ein solches Minimum tritt insbesondere in dem der vertikalen Linie unmittelbar folgenden Zeitabschnitt auf, dies entspricht zeitlich dem Bereich, in dem sich das Motorrad nach dem Lösen der Bremse und vor der Beschleunigung mittels Gasgebens in einer vom Fahrer wenig beeinflussbaren Phase befindet. Die Radkraft durcheilt ein Minimum, die Seitenführungskraft infolgedessen ebenso, die Gefahr eines Sturzes ist hoch.

Vergleicht man dies mit dem Verlauf der Radkraft, der mit D1 bezeichnet ist, der dem Verlauf der Radkraft mit der erfindungsgemäßen Einrichtung entspricht, so zeigt sich der wesentlich gleichmäßigere Verlauf der Kurve D1 im Vergleich mit der Kurve D2.

Die Fläche der die Amplitudenmaxima der resultierenden Radkraft einhüllenden Hüllkurve über das betrachtete Zeitintervall für das mit der erfindungsgemäßen Teleskopfedergabel 15 ausgestattete Motorrad ist wesentlich kleiner als für das mit der konventionellen Teleskopfedergabel ausgestattete Motorrad. Hieran kann erkannt werden, dass die Amplitudenmaxima der resultierenden Radkraft, und folglich die Amplituden der Radkraftschwankungen kleiner geworden sind.

Die Radkraftschwankungsamplituden am Vorderrad sind beim Motorrad mit der konventionellen Teleskopfedergabel größer. Es manifestieren sich sehr große Maxima der Radkraft, also ein Chattering. Die Dämpfungskraft der erfindungsgemäßen Einrichtung verringert die Radkraftschwankungsamplituden beträchtlich, die verkleinerten Amplituden der Massenkraft zeigen, dass dem Chattering während der Durchfahrt durch die Kurve eine wirksame Dämpfungskraft entgegen wirkt. Der Fahrer merkt dies dadurch, dass die bei der Kurvenfahrt ansonsten zu beobachtenden Vibrationen im Bereich des Vorderrads in Hochachsrichtung des Motorrads ausbleiben oder zumindest wesentlich geringer in Erscheinung treten, dem Chattering wurde wirksam entgegen gewirkt.

Hinsichtlich vorstehend im einzelnen nicht näher erläuterter Merkmale der Erfindung wird im übrigen ausdrücklich auf die Patentansprüche und die Zeichnungen verwiesen.

### Bezugszeichenliste

- 1: Dämpfungskolben
- 2: Dämpfungsfedereinrichtung
- 3: zweiter Dämpfungskolben
- 4: untere Kolbenstange
- 5: obere Kolbenstange
- 6: Hauptfeder
- 7: Außenrohr
- 8: Innenrohr
- 9: Gabelfaust
- 10: Dämpfungsrohr
- 11: oberer Verschlussdeckel
- 12: unterer Verschlussdeckel
- 13: Verbindungsrohr
- 14: Federscheiben
- 15: erstes Teleskopfedergabelbein
- 16: Dämpfungseinrichtung
- 17: Verschlussdeckel
- 18: erste Kammer
- 19: zweite Kammer
- 20: Einstellnadel
- 21: Ausweichkörper
- 22: zweites Teleskopfedergabelbein
- 23: Gabelbrücke
- 24: Ringraumkammer
- 25: Teleskopfedergabel
- 26: Durchlass des Verbindungsrohrs
- 27: Durchlass des Verbindungsrohrs
- 28: Einstellvorrichtung
- 29: Durchlass
- 30: Dämpfungseinrichtung
- 31: Verschlussdeckel
- 32: topfförmig ausgebildeter Deckel
- 33: Ringraumkammer
- 34: Bohrung
- 35: Durchlass
- 36: Federscheiben
- 37: erste Kammer
- 38: zweite Kammer
- 39: Verbindungsrohr
- 40: Durchlass des Verbindungsrohrs
- 41: Bohrungen
- 42: Einstellnadel
- 43: Kolbenstange
- 44: Einstellvorrichtung
- 45: Klemmfaust
- 46: Innenrohr
- 47: Außenrohr
- 48: Hauptfeder
- 49: Gabelfaust
- 50: Kolbenstange
- 51: Dämpfungsrohr
- 52: Verbindungsrohr
- 53: Trennkolben
- 54: Ausgleichsfedereinrichtung
- 55: weitere Fluidkammer
- 56: Kammer
- 57: Dämpfungsfeder
- 58: Verstellrohr
- 59: Steckachse
- A: Federwegprofile
- B: Radkraftkomponenten mit konventioneller Telegabel
- C: Radkraftkomponenten mit erfindungsgemäßer Telegabel
- D: Resultierende Radkräfte
- F: Pfeil

## Patentansprüche

1. Einrichtung zur Führung eines Rades eines Fahrzeugs, mit einer ersten Dämpfungseinrichtung (16) und einer zweiten Dämpfungseinrichtung (30), wobei die zweite Dämpfungseinrichtung (30) zur Erzeugung einer zur Radkraft zwischen 0 und 90 Grad phasenverschobenen zweiten Dämpfungskraft ausgebildet ist, **dadurch gekennzeichnet, dass** die erste Dämpfungseinrichtung (16) zur Beschränkung einer weitgehend periodischen Radkraftschwankungsamplitude mittels Erzeugung einer zur Radkraft zwischen 90 und 270 Grad phasenverschobenen ersten Dämpfungskraft ausgebildet ist, deren Schwankungsperiode weitgehend einem n-fachen der Periode der Radkraftschwankung entspricht.

2. Einrichtung nach Anspruch 1, **dadurch gekennzeichnet, dass** die erste Dämpfungseinrichtung (16) zur mechanischen und/oder elektrischen und/oder magnetischen und/oder rheologischen und/oder hydraulischen und/oder chemischen Erzeugung der ersten Dämpfungskraft ausgebildet ist.

3. Einrichtung nach Anspruch 1 oder 2, **dadurch gekennzeichnet, dass** die erste Dämpfungseinrichtung (16) zur hydraulischen Erzeugung der ersten Dämpfungskraft ausgebildet ist und mindestens einen Kolben (1) aufweist, der relativ zu einem in einer Fluidkammer (18, 19) angeordneten Dämpfungsfluid verschiebbar angeordnet ist.

4. Einrichtung nach Anspruch 1, **dadurch gekennzeichnet, dass** die erste Dämpfungseinrichtung (16) eine Vorrichtung zur Erzeugung einer Phasenverschiebung zwischen der Radkraft und der ersten Dämpfungskraft aufweist.

5. Einrichtung nach Anspruch 4, **dadurch gekennzeichnet, dass** die Vorrichtung zur Erzeugung der Phasenverschiebung eine Dämpfungsfedereinrichtung (2) aufweist, und der Kolben (1) innerhalb eines eine Radkraft übertragenden und die Fluidkammer (18, 19) ausbildenden Dämpfungsrohrs (10) bewegbar an der Dämpfungsfedereinrichtung (2) angeordnet ist.

6. Einrichtung nach Anspruch 5, **dadurch gekennzeichnet, dass** die Dämpfungsfedereinrichtung (2) zwei Federn (57) aufweist, und der Kolben (1) zwischen den beiden Federn (57) angeordnet ist.

7. Einrichtung nach einem der Ansprüche 3 bis 6, **dadurch gekennzeichnet, dass** die Fluidkammer (18, 19) zwei durch den Kolben (1) körperlich getrennte Kammern (18, 19) aufweist, und ein die beiden Kammern (18, 19) fluidisch verbindendes Verbindungsrohr (13) aufweist.

8. Einrichtung nach einem der Ansprüche 5 bis 7, **dadurch gekennzeichnet, dass** die Steifigkeit der Dämpfungsfedereinrichtung (2) und/oder der ersten Dämpfungseinrichtung (16) zur Veränderung der Phasenverschiebung zwischen Radkraft und ersten Dämpfungskraft anpassbar und/oder einstellbar ist.

9. Einrichtung nach Anspruch 7 oder 8, **dadurch gekennzeichnet, dass** die Einrichtung eine Einstellnadel (20) besitzt, und das Verbindungsrohr (13) mit den jeweiligen Kammern (18, 19) fluidisch verbindbare Durchlässe (26, 27) aufweist, wobei der Querschnitt mindestens eines Durchlasses (27) mittels der Einstellnadel (20) zur Veränderung der Steifigkeit der ersten Dämpfungseinrichtung (16) veränderbar ist.

10. Einrichtung nach einem der Ansprüche 3 bis 8, **dadurch gekennzeichnet, dass** der Kolben (1) mindestens einen mittels mindestens einer Federscheibe (14) verschließbaren Fluiddurchlass (29) besitzt.

11. Einrichtung nach einem der Ansprüche 1 bis 10, mit einem Teleskopfedergabelbein (15), welches ein Innenrohr (8), ein Außenrohr (7) und eine Hauptfedereinrichtung (6) besitzt, die innerhalb einer im Außenrohr (7) ausgebildeten ersten Kammer (56) angeordnet ist, **dadurch gekennzeichnet, dass** die erste Dämpfungseinrichtung (16) innerhalb des Innenrohrs (8) angeordnet ist.

12. Einrichtung nach Anspruch 11, **gekennzeichnet durch** ein zweites Teleskopfedergabelbein (22), welches ein Innenrohr (46), ein Außenrohr (47) und eine Hauptfedereinrichtung (48) besitzt, die innerhalb einer im Außenrohr (47) ausgebildeten ersten Kammer (33) angeordnet ist, und die zweite Dämpfungseinrichtung (30) innerhalb des Innenrohrs (46) angeordnet ist.

13. Verfahren zur Führung eines Rades eines Fahrzeugs, dessen Radkraft veränderbar ist, mittels einer mit einer ersten Dämpfungseinrichtung (16) und einer zweiten Dämpfungseinrichtung (30) funktional gekoppelten Radführungseinrichtung, wobei mit der zweiten Dämpfungseinrichtung (30) eine zur Radkraft zwischen 0 und 90 phasenverschobene zweite Dämpfungskraft erzeugt wird, **dadurch gekennzeichnet, dass** eine weitgehend periodische Radkraftschwankungsamplitude beschränkt wird mittels einer von der ersten Dämpfungseinrichtung (16) erzeugten und zur Radkraft zwischen 90 und 270 Grad phasenverschobenen ersten Dämpfungskraft, deren Periode weitgehend einem n-fachen der Periode der Radkraftschwankung entspricht.

14. Verfahren nach Anspruch 13, **dadurch gekennzeichnet, dass** die erste Dämpfungskraft in Abhängigkeit der Amplitude und/oder der Frequenz der Radkraftschwankung erzeugt wird.

15. Verfahren nach Anspruch 13 oder 14, **dadurch gekennzeichnet, dass** die erste Dämpfungskraft mechanisch und/oder elektrisch und/oder magnetisch und/oder rheologisch und/oder hydraulisch und/oder chemisch erzeugt wird.

16. Verfahren nach einem der Ansprüche 13 bis 15, **dadurch gekennzeichnet, dass** die erste Dämpfungskraft hydraulisch erzeugt wird mittels wenigstens eines, relativ zu einem in einer Fluidkammer (18, 19) angeordneten Dämpfungsfluid verschiebbar angeordneten Kolbens (1).

## Claims

1. A device for guiding a wheel of a vehicle, with a first damping device (16) and a second damping device (30), wherein the second damping device (30) is designed for generating a second damping force which is phase-shifted with respect to the wheel force between 0 and 90 degrees, **characterized in that** the first damping device (16) is designed for limiting a largely periodic wheel force fluctuation amplitude by means of generating a first damping force which is phase-shifted with respect to the wheel force between 90 and 270 degrees and the fluctuation period of which largely corresponds to n times the period of the wheel force fluctuation.

2. The device according to claim 1, **characterized in that** the first damping device (16) is designed for mechanical and/or electrical and/or magnetic and/or rheological and/or hydraulic and/or chemical generation of the first damping force.

3. The device according to claim 1 or 2, **characterized in that** the first damping device (16) is designed for hydraulic generation of the first damping force and has at least one piston (1) which is arranged displaceably relative to a damping fluid arranged in a fluid chamber (18, 19).

4. The device according to claim 1, **characterized in that** the first damping device (16) has a device for generating a phase shift between the wheel force and the first damping force.

5. The device according to claim 4, **characterized in that** the device for generating the phase shift has a damping spring device (2), and the piston (1) is arranged movably on the damping spring device (2) within a damping tube (10) that transmits a wheel force and forms the fluid chamber (18, 19).

6. The device according to claim 5, **characterized in that** the damping spring device (2) has two springs (57), and the piston (1) is arranged between the two springs (57) .

7. The device according to any one of claims 3 to 6, **characterized in that** the fluid chamber (18, 19) has two chambers (18, 19) physically separated by the piston (1), and has a connecting tube (13) fluidically connecting the two chambers (18, 19).

8. The device according to any one of claims 5 to 7, **characterized in that** the stiffness of the damping spring device (2) and/or the first damping device (16) can be adapted and/or adjusted for the purpose of changing the phase shift between wheel force and first damping force.

9. The device according to claim 7 or 8, **characterized in that** the device has an adjusting needle (20) and the connecting tube (13) has passages (26, 27) which can be fluidically connected to the respective chambers (18, 19), wherein the cross-section of at least one passage (27) can be changed by means of the adjusting needle (20) for changing the stiffness of the first damping device (16).

10. The device according to any one of claims 3 to 8, **characterized in that** the piston (1) has at least one fluid passage (29) which can be closed by means of at least one spring washer (14).

11. The device according to one any of claims 1 to 10, with a telescopic suspension fork (15) which has an inner tube (8), an outer tube (7) and a main spring device (6) which is arranged within a first chamber (56) formed in the outer tube (7), **characterized in that** the first damping device (16) is arranged within the inner tube (8).

12. The device according to claim 11, **characterized by** a second telescopic suspension fork (22) which has an inner tube (46), an outer tube (47) and a main spring device (48) which is arranged within a first chamber (33) formed in the outer tube (47), and the second damping means (30) being arranged within the inner tube (46).

13. A method for guiding a wheel of a vehicle, the wheel force of which is variable, by means of a wheel guide device functionally coupled to a first damping device (16) and a second damping device (30), wherein a second damping force which is phase-shifted with respect to the wheel force between 0 and 90 is generated with the second damping device (30), **characterized in that** a largely periodic wheel force fluctuation amplitude is limited by means of a first damping force which is generated by the first damping device (16) and is phase-shifted with respect to the wheel force between 90 and 270 degrees and the period of which largely corresponds to n times the period of the wheel force fluctuation.

14. The method according to claim 13, **characterized in that** the first damping force is generated as a function of the amplitude and/or the frequency of the wheel force fluctuation.

15. The method according to claim 13 or 14, **characterized in that** the first damping force is generated mechanically and/or electrically and/or magnetically and/or rheologically and/or hydraulically and/or chemically.

16. The method according to any one of claims 13 to 15, **characterized in that** the first damping force is generated hydraulically by means of at least one piston (1) arranged displaceably relative to a damping fluid arranged in a fluid chamber (18, 19).

## Revendications

1. Dispositif de guidage d'une roue d'un véhicule, doté un premier système amortisseur (16) et d'un deuxième système amortisseur (30), le deuxième système amortisseur (30) étant conçu pour générer une deuxième force d'amortissement déphasée d'entre 0 et 90 degrés par rapport à l'effort exercé sur la roue, **caractérisé en ce que** pour restreindre une amplitude de variation amplement périodique de l'effort exercé sur la roue, le premier système amortisseur (16) est conçu pour générer une force d'amortissement déphasée d'entre 90 et 270 degrés par rapport à l'effort exercé sur la roue, dont la période de variation correspond amplement à un multiple n de la période de variation de l'effort exercé sur la roue.

2. Dispositif selon la revendication 1, **caractérisé en ce que** le premier système amortisseur (16) est conçu pour la génération mécanique et/ou électrique et/ou magnétique et/ou rhéologique et/ou hydraulique et/ou chimique de la première force d'amortissement.

3. Dispositif selon la revendication 1 ou 2, **caractérisé en ce que** le premier système amortisseur (16) est conçu pour la génération hydraulique de la première force d'amortissement et comporte au moins un piston (1), qui est placé en étant déplaçable par rapport à un fluide amortisseur se trouvant dans une chambre à fluide (18, 19).

4. Dispositif selon la revendication 1, **caractérisé en ce que** le premier système amortisseur (16) comporte un dispositif de génération d'un déphasage entre l'effort exercé sur la roue et la première force d'amortissement.

5. Dispositif selon la revendication 4, **caractérisé en ce que** le dispositif de génération d'un déphasage comporte un système amortisseur à ressort (2) et le piston (1) est placé sur le système amortisseur à ressort (2), en étant déplaçable à l'intérieur d'un tube amortisseur (10) transmettant un effort exercé sur la roue et formant la chambre à fluide (18, 19).

6. Dispositif selon la revendication 5, **caractérisé en ce que** le système amortisseur à ressort (2) comporte deux ressorts (57) et le piston (1) est placé entre les deux ressorts (57).

7. Dispositif selon l'une quelconque des revendications 3 à 6, **caractérisé en ce que** la chambre à fluide (18, 19) comporte deux chambres (18, 19) physiquement séparées par le piston (1) et un tube de liaison (13), reliant fluidiquement les deux chambres (18, 19).

8. Dispositif selon l'une quelconque des revendications 5 à 7, **caractérisé en ce que** la rigidité du système amortisseur à ressort (2) et du premier système amortisseur (16) est adaptable et/ou réglable pour faire varier le déphasage entre l'effort exercé sur la roue et la première force d'amortissement.

9. Dispositif selon l'une quelconque des revendications 7 ou 8, **caractérisé en ce que** le dispositif dispose d'un pointeau (20) et le tube de liaison (13) comporte des passages (26, 27) susceptibles d'être fluidiquement reliés avec les chambres (18, 19) respectives, la section transversale d'au moins un passage (27) étant variable au moyen du pointeau (20), pour faire varier la rigidité du premier système amortisseur (16).

10. Dispositif selon l'une quelconque des revendications 3 à 8, **caractérisé en ce que** le piston (1) dispose d'au moins un passage de fluide (29) pouvant se fermer au moyen d'au moins une rondelle élastique (14).

11. Dispositif selon l'une quelconque des revendications 1 à 10, avec une jambe de fourche à ressort télescopique (15), laquelle comporte un tube intérieur (8), un tube extérieur (7) et un système principal à ressort (6) qui est placé à l'intérieur d'une première chambre (56) conçue dans le tube extérieur (7), **caractérisé en ce que** le premier système amortisseur (16) est placé à l'intérieur du tube intérieur (8).

12. Dispositif selon la revendication 1, **caractérisé par** une deuxième jambe de fourche à ressort télescopique (22), laquelle comporte un tube intérieur (46), un tube extérieur (47) et un système principal à ressort (48) qui est placé à l'intérieur d'une première chambre (33) conçue dans le tube extérieur (47) et en ce que le deuxième système amortisseur (30) est placé à l'intérieur du tube intérieur (46).

13. Procédé destiné à guider une roue d'un véhicule, dont l'effort exercé sur la roue est variable, au moyen d'un dispositif de guidage de roue fonctionnellement couplé avec un premier système amortisseur (16) et un deuxième système amortisseur (30), lors duquel, à l'aide du deuxième système amortisseur (30), il est généré une deuxième force d'amortissement déphasée d'entre 0 et 90 degrés par rapport à l'effort exercé sur la roue, **caractérisé en ce qu'**une amplitude de fluctuation amplement périodique de l'effort exercé sur la roue est restreinte au moyen d'une première force d'amortissement générée par le premier système amortisseur (16) et déphasée d'entre 90 et 270 degrés par rapport à l'effort exercé sur la roue, dont la période correspond amplement à un multiple n de la période de la fluctuation de l'effort exercé sur la roue.

14. Procédé selon la revendication 13, **caractérisé en ce que** la première force d'amortissement est générée en fonction de l'amplitude et/ou de la fréquence de la fluctuation de l'effort exercé sur la roue.

15. Procédé selon la revendication 13 ou 14, **caractérisé en ce que** la première force d'amortissement est générée par voie mécanique et/ou électrique et/ou magnétique et/ou rhéologique et/ou hydraulique et/ou chimique.

16. Procédé selon l'une quelconque des revendications 13 à 15, **caractérisé en ce que** la première force d'amortissement est créée par voie hydraulique au moyen d'au moins piston (1) placé en étant déplaçable par rapport à un fluide amortisseur se trouvant dans une chambre à fluide (18, 19).
